(19) Europäisches Patentamt
European Patent Office
Office européen des brevets

(11) EP 3 168 042 A1

(12) **EUROPEAN PATENT APPLICATION**
published in accordance with Art. 153(4) EPC

(43) Date of publication:
**17.05.2017 Bulletin 2017/20**

(21) Application number: **14897384.5**

(22) Date of filing: **16.09.2014**

(51) Int Cl.:
***B32B 27/00*** *(2006.01)* ***B32B 27/40*** *(2006.01)*

(86) International application number:
**PCT/JP2014/074384**

(87) International publication number:
**WO 2016/006125 (14.01.2016 Gazette 2016/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.07.2014 JP 2014142976**

(71) Applicant: **DIC Corporation**
**Tokyo 174-8520 (JP)**

(72) Inventors:
- **SHIMOGUCHI, Mutsuhiro**
  **Tokyo 174-8520 (JP)**
- **OOKUBO, Tomoo**
  **Tokyo 174-8520 (JP)**

(74) Representative: **Adam, Holger**
**Kraus & Weisert**
**Patentanwälte PartGmbB**
**Thomas-Wimmer-Ring 15**
**80539 München (DE)**

# (54) LAMINATED BODY WITH SEALANT FILM

(57) A problem of the present invention is to provide a laminate which can be used as a packaging material mainly for food and the like and which uses a sealant layer having a specific adhesive layer having the oxygen- or gas-barrier properties in order to exhibit the excellent oxygen- or gas-barrier properties. The problem is solved by providing a laminate (A2) including a laminate (A1) used as a sealant film and having a layer configuration of base film/adhesive/laminate (A1), wherein the laminate (A1) has a layer configuration of film/oxygen or water-vapor barrier adhesive (B)/sealant film.

EP 3 168 042 A1

## Description

Technical Field

The present invention relates to a laminate having a sealant film with oxygen or water-vapor barrier properties.

Background Art

Materials formed into composite films by laminating multiple layers of various plastic films, a metal, a glass-deposited film, a metal foil, etc. have been used as food packaging materials. A method for laminating the various plastic films, metal, glass-deposited film, metal foil, etc. uses a technique called "dry lamination" in which an adhesive is applied to a surfaces of a material, a solvent is dried and removed by evaporation, and then another material is laminated under heating and compression. This technique is capable of freely bonding together any desired films and producing composite films having performances according to purposes and is thus widely used for producing food packaging materials required to have high performance.

In order to mold and process these composite films as packing materials, a sealant film (film having heat sealability) is generally used. Polyethylene and polypropylene films are often used as the sealant film, but these films have water vapor barrier properties but not oxygen or water-vapor barrier properties. Therefore, various companies develop and sell multilayer co-extruded films formed by a co-extrusion film forming machine using an ethylene-vinyl alcohol copolymer or polyvinylidene chloride as an intermediate layer and polyethylene as an outer layer for imparting oxygen or water-vapor barrier properties to sealant films.

However, a co-extruded film using ethylene-vinyl alcohol as an intermediate layer has the problem of decreasing the oxygen or water-vapor barrier properties under high humidity because of its high humidity dependence and the problem of being unable to cope with hot water sterilization such as boiling, retorting, or the like. On the other hand, a co-extruded film using polyvinylidene chloride as an intermediate layer has hot water resistance as compared with ethylene-vinyl alcohol, but has the environmental problem of a possibility of generating dioxin during incineration of the film or the like.

Patent Literature 1 describes a modified polyolefin composition having excellent adhesion, and describes in detail a modified polyolefin composition including low-crystallinity or amorphous ethylene-α-olefin random copolymer, which has excellent adhesion to a polystyrene and/or ethylene-vinyl acetate copolymer saponified product and excellent extrusion processability, a tackifier, and modified polyethylene. The composition has the characteristics of excellent adhesion to PS and EVOH and excellent hue, weather resistance, extrusion moldability, film uniformity, etc. and can be used for food and medical film packaging materials having excellent gas impermeability and moisture resistance when laminated with PS and EVOH, pressure-molded cap, and the like.

Patent Literature 2 relates to a heat-resistant laminate capable of forming flexible packages with excellent heat sealability, wherein a layer which includes a resin composition containing linear low-density polyethylene and an ethylene copolymer containing 8 to 30 mol% of α-olefin is used a heat seal layer, and the layer is used as an inner layer during production of the laminate, thereby causing high openability and permitting easy production by an inflation method.

Patent Literature 3 describes a multilayer structure formed by directly laminating a seal layer (A) and a gas barrier resin layer (B) having an oxygen permeation rate of 10 cc. 20 μm/m$^2$·day·atm (20°C, 65%RH) or less, wherein the seal strength of the seal layer (A) is 100 gf/15 mm or more, and when the SP value of a resin (a) constituting the seal layer (A) is $SP_A$, and the SP value of a resin (b) constituting the gas barrier resin layer (B) is $SP_B$, $SP_A$ and $SP_B$ satisfy an expression (1) below, the resin (a) and the resin (b) being different from each other.

[Math. 1]

$$0 \leq |SP_A - SP_B| \leq 4 \quad (1)$$

Patent Literature 4 describes a co-extruded composite film including an ethylene-vinyl alcohol resin layer as a barrier layer, wherein a heat-resistant polyamide resin layer having a thermal deformation temperature (ASTM D648) within a range of 100°C to 180°C is disposed as an outermost layer opposite to a seal layer.

Patent Literature 5 describes a gas barrier multilayer film including a gas barrier adhesive layer which contains polyester polyol (A) having two or more hydroxyl groups and polyisocyanate (B) having two or more isocyanate groups, wherein the gas barrier multilayer film further includes a sealant layer and has a multilayer structure including the sealant layer in contact with the gas barrier adhesive layer. In the document, a known common film can be used as a sealant film, and examples thereof include a cast polypropylene film (CPP) film, a polyethylene film (PE), and the like.

Citation List

Patent Literature

PTL 1: Japanese Unexamined Patent Application Publication No. 61-162539
PTL 2: Japanese Unexamined Patent Application Publication No. 61-284439
PTL 3: Japanese Unexamined Patent Application Publication No. 2005-081658
PTL 4: Japanese Unexamined Patent Application Publication No. 10-095083
PTL 5: Japanese Unexamined Patent Application Publication No. 2013-129152

Summary of Invention

Technical Problem

The adhesive layers used in many of the multilayer films described above in the related background art have no gas barrier properties, and thus it is necessary to apply another layer having gas barrier properties for cutting off gas and the like from packaged contents. However, polyvinylidene chloride (PVDC film) generally used as a film constituting the layer having the gas barrier properties has the problem of coloring by ultraviolet light absorption and the problem of causing the produced decomposed products to reach contents through a sealant layer and mixing the contents with foreign matters such as the decomposed products or the like.

In some cases, a sealant film is used, but a layer exhibiting the effective oxygen or water-vapor barrier properties is not used as a layer used as the sealant film.

Therefore, a problem to be solved by the present invention is to provide a laminate which can be used as a packaging material mainly for food and the like and which uses a sealant layer including a specific adhesive layer having the oxygen or water-vapor barrier properties in order to exhibit the excellent oxygen or water-vapor barrier properties.

Solution to Problem

The inventors solved the problem by a laminate (A2) including a laminate (A1) used as a sealant film in a layer configuration of base film/adhesive/laminate (A1), wherein the laminate (A1) has a layer configuration of film/oxygen or water-vapor barrier adhesive (B)/sealant film.

Advantageous Effects of Invention

According to the present invention, it is possible to provide a laminate which can be used as a packaging material and the like mainly used for food and which uses a sealant layer having a specific adhesive layer having the oxygen or water-vapor barrier properties in order to exhibit the excellent oxygen or water-vapor barrier properties.

Description of Embodiments

That is, the present invention includes items below.

1. A laminate (A2) including a laminate (A1) used as a sealant film and having a layer configuration of base film/adhesive/laminate (A1), wherein the laminate (A1) has a layer configuration of film/oxygen or water-vapor barrier adhesive (B)/sealant film.
2. The laminate (A2) described in 1, wherein the oxygen or water-vapor barrier adhesive (B) includes a resin containing a resin (b1) having two or more hydroxyl groups as functional groups in one molecule and an isocyanate compound (b2) having two or more isocyanate groups as functional groups in one molecule.
3. The laminate (A2) described in 1 or 2, wherein the main skeleton of the resin (b1) has a polyester polyol, polyester polyurethane polyol, polyether polyol, or polyether polyurethane polyol structure.
4. The laminate (A2) described in 3, wherein the main skeleton of the resin (b1) has the polyester polyol or polyester polyurethane polyol structure, and the ratio of use of an ortho-oriented aromatic dicarboxylic acid or anhydride thereof is 70% to 100% by mass relative to all polyvalent carboxylic acid components of a polyester-constituting monomer component.
5. The laminate (A2) described in 4, wherein the ortho-oriented aromatic dicarboxylic acid or anhydride thereof is at least one selected from the group consisting of orthophthalic acid or anhydride thereof, naphthalene-2,3-dicarboxylic acid or anhydride thereof, naphthalene-1,2-dicarboxylic acid or anhydride thereof, anthraquinone-2,3-dicarboxylic acid or anhydride thereof, and 2,3-anthracenedicarboxylic acid or anhydride thereof.

6. The laminate (A2) described in any one of 1 to 5, wherein the oxygen or water-vapor barrier adhesive layer further contains an interlayer nonionic or water-non-swelling plate-like inorganic compound (C).
7. The laminate (A2) described in any one of 1 to 6, wherein the laminate (A2) is used as an oxygen or water-vapor barrier film.

<Oxygen or water-vapor barrier adhesive (B)>

The oxygen or water-vapor barrier adhesive (B) of the present invention includes a resin containing the resin (b1) having two or more hydroxyl groups as functional groups in one molecule and the isocyanate compound (b2) having two or more isocyanate groups as functional groups in one molecule.

[Resin (b1) having two or more hydroxyl groups as functional groups in one molecule]

The resin (b1) used in the present invention is not particularly limited as long as it is a resin having hydroxyl groups as functional groups in one molecule, it is characterized in that the main skeleton thereof contains polyester, polyester polyurethane, polyether, or polyether polyurethane, and it can exhibit adhesive force or oxygen or water-vapor barrier properties, which are intended in the present invention.
The polyester used in the present invention can be produced by using a known technique of, for example, reacting a polyhydric alcohol with a polyvalent carboxylic acid. The polyester polyurethane can be produced by using a known technique of, for example, reacting a polyester polyol with a diisocyanate. The polyether can be produced by using a known technique of, for example, polymerizing an oxirane compound such as ethylene oxide, propylene oxide, butylene oxide, tetrahydrofuran, or the like using as an initiator, for example, water or a low-molecular-weight polyol such as ethylene glycol, propylene glycol, trimethylolpropane, glycerin, or the like. The polyether polyurethane can be produced by using a known technique of, for example, reacting a polyether with a diisocyanate.

(Polyvalent carboxylic acid)

Examples of a polyvalent carboxylic acid component of the resin (b1) of the present invention include aliphatic polyvalent carboxylic acids such as succinic acid, adipic acid, azelaic acid, sebacic acid, dodecanedicarboxylic acid, and the like; alicyclic polyvalent carboxylic acids such as 1,3-cyclopentanedicarboxylic acid, 1,4-cyclohexanedicarboxylic acid, and the like; aromatic polyvalent carboxylic acids such as orthophthalic acid, terephthalic acid, isophthalic acid, pyromellitic acid, trimellitic acid, 1,4-naphthalenedicarboxylic acid, 2,5-naphthalenedicarboxylic acid, 2,6-naphthalenedicarboxylic acid, naphthalic acid, biphenyldicarboxylic acid, 1,2-bis(phenoxy)ethane-p,p'-dicarboxylic acid, and anhydrides or ester-forming derivatives of these dicarboxylic acids; and polybasic acids such as p-hydroxybenzoic acid, p-(2-hydroxyethoxy)benzoic acid, ester-forming derivatives of these dihydroxycarboxylic acids, and the like. These can be used alone or as a mixture of two or more. Also, anhydrides of these dicarboxylic acids can be used. Among these, succinic acid, 1,3-cyclopentanedicarboxylic acid, orthophthalic acid, orthophthalic acid anhydride, and isophthalic acid are preferred, and orthophthalic acid and anhydride thereof are more preferred for obtaining the barrier properties.

(Polyhydric alcohol component)

Examples of the polyhydric alcohol used in the present invention include aliphatic diols such as ethylene glycol, propylene glycol, butylene glycol, neopentyl glycol, cyclohexane dimethanol, 1,5-pentanediol, 3-methyl-1,5-pentanediol, 1,6-hexanediol, methylpentanediol, dimethylbutanediol, butylethylpropanediol, diethylene glycol triethylene glycol, tetraethylene glycol, dipropylene glycol, and tripropylene glycol; aromatic polyhydric phenols such as hydroquinone, resorcinol, catechol, naphthalenediol, biphenol, bisphenol A, bisphenol F, tetramethylbiphenol, and ethylene oxide extension products and hydrogenated alicyclic compounds of these polyhydric alcohols. Among these, ethylene glycol, propylene glycol, butylene glycol, neopentyl glycol, and cyclohexanedimethanol are preferred, and ethylene glycol is more preferred because it is estimated that with decreasing number of carbon atoms between oxygen atoms, a molecular chain does not become excessively flexible and oxygen hardly permeates. The polycondensation reaction of polyvalent carboxylic acid with polyhydric alcohol can be performed by a known common method.
More specific examples of the resin (b1) having two or more hydroxyl groups of the present invention include:

- a polyester polyol (b1-1) produced by reacting a polyester polyol having three or more hydroxyl groups with a carboxylic acid anhydride or polycarboxylic acid;
- a polyester polyol (b1-2) having a polymerizable carbon-carbon double bond;
- a polyester polyol (b1-3) having a glycerol skeleton;
- a polyester polyol (b1-4) produced by polycondensation of an ortho-oriented polyvalent carboxylic acid component

with a polyhydric alcohol component;

- a polyester polyol (b1-5) having an isocyanuric ring; and the like.

Each of the polyester polyols is described below.

[Polyester polyol (b1-1) produced by reacting polyester polyol having three or more hydroxyl groups with a carboxylic acid anhydride or polycarboxylic acid]

The polyester polyol (b1-1) used in the present invention is produced by reacting a polyester polyol (I) having three or more hydroxyl groups with a carboxylic acid anhydride or polyvalent carboxylic acid and has at least one carboxyl group and two or more hydroxyl groups. The polyester polyol (I) having three or more hydroxyl groups can be obtained by using a polyvalent carboxylic acid or polyhydric alcohol having a trivalent or higher valent portion.

The polyester polyol (b1-1) can be produced by reacting the polyester polyol (I) having three or more hydroxyl groups and containing a polyhydric alcohol component and a polyhydric alcohol component, preferably, a polyvalent carboxylic acid component containing at least one of orthophthalic acid and anhydride thereof, and a polyhydric alcohol component containing at least one selected from the group consisting of ethylene glycol, propylene glycol, butylene glycol, neopentyl glycol, and cyclohexanedimethanol, with a carboxylic acid anhydride or polyvalent carboxylic acid. The polyester polyol (b1-1) has at least one carboxyl group and two or more hydroxyl groups.

(Orthophthalic acid and anhydride thereof)

The orthophthalic acid and anhydride thereof have a skeleton with an asymmetric structure. Therefore, it is estimated that rotation suppression of the molecular chain of the resultant polyester occurs and thus the excellent oxygen or water-vapor barrier properties are exhibited. It is also estimated that amorphousness is exhibited due to the asymmetric structure, and sufficient base material adhesion is imparted, thereby causing excellent adhesive force and oxygen or water-vapor barrier properties. Further, there is possessed the characteristic of exhibiting high solvent solubility essential for use as a dry lamination adhesive, thereby causing excellent handleability.

(Polyvalent carboxylic acid and other component)

When a branch structure is introduced by a polyvalent carboxylic acid component during synthesis of the polyester polyol (I) having three or more hydroxyl groups, it is necessary for the component to have a tri- or higher-valent carboxylic acid in at least a portion. Examples of such a compound include trimellitic acid and anhydride thereof, pyromellitic acid and anhydride thereof, but a trivalent carboxylic acid is preferred as the tri- or higher-valent polycarboxylic acid in order to prevent gelling during the synthesis.

The polyester polyol (I) of the present invention may be copolymerized with another polyvalent carboxylic acid component as another component within a range where the effect of the present invention is not impaired. Examples thereof include aliphatic polyvalent carboxylic acids such as succinic acid, adipic acid, azelaic acid, sebacic acid, dodecanedicarboxylic acid, and the like; unsaturated bond-containing polyvalent carboxylic acids such as meleic anhydride, maleic acid, fumaric acid, and the like; alicyclic polyvalent carboxylic acids such as 1,3-cyclopentane dicarboxylic acid, 1,4-cyclohexane dicarboxylic acid, and the like; aromatic polyvalent carboxylic acids such as terephthalic acid, isophthalic acid, pyromellitic acid, trimellitic acid, 1,4-naphthalene dicarboxylic acid, 2,5-naphthalene dicarboxylic acid, 2,6-naphthalene dicarboxylic acid, naphthalic acid, biphenyl dicarboxylic acid, 1,2-bis(phenoxy)ethane-p,p'-dicarboxylic acid, and anhydrides or ester-forming derivatives of these dicarboxylic acids; and polybasic acids such as p-hydroxybenzoic acid, p-(2-hydroxyethoxy)benzoic acid, and ester-forming derivatives of these dihydroxycarboxylic acids, and the like. These can be used alone or as a mixture of two or more. Among these, succinic acid, 1,3-cyclopentane dicarboxylic acid, and isophthalic acid are preferred.

(Polyhydric alcohol component)

The polyhydric alcohol component used in the present invention preferably contains at least one selected from the group consisting of ethylene glycol, propylene glycol, butylene glycol, neopentyl glycol, and cyclohexane dimethanol. Among these, ethylene glycol is most preferably used because it is estimated that with decreasing number of carbon atoms between oxygen atoms, a molecular chain does not become excessively flexible and oxygen hardly permeates.

(Polyhydric alcohol and other component)

When a branch structure is introduced by a polyhydric alcohol component during synthesis of the polyester

polyol (I) having three or more hydroxyl groups, it is necessary for the component to have a tri- or higher-hydric alcohol in at least a portion. Examples of such a compound include glycerin, trimethylolpropane, trimethylolethane, tris(2-hydroxyethyl) isocyanurate, 1,2,4-butanetriol, pentaerythritol, dipentaerythritol, and the like, but a trihydric alcohol is preferred as the tri- or higher-hydric alcohol in order to prevent gelling during the synthesis.

In the present invention, the polyhydric alcohol may be copolymerized with another polyvalent carboxylic acid component as another component within a range where the effect of the present invention is not impaired. Examples thereof include aliphatic diols such as 1,5-pentanediol, 3-methyl-1,5-pentanediol, 1,6-hexanediol, methylpentanediol, dimethylbutanediol, butylethylpropanediol, diethylene glycol, triethylene glycol, tetraethylene glycol, dipropylene glycol, and tripropylene glycol; aromatic polyhydric phenols such as hydroquinone, resorcinol, catechol, naphthalenediol, biphenol, bisphenol A, bisphenol F, tetramethylbiphenol, and ethylene oxide extension products and hydrogenated alicyclic compounds of these polyhydric alcohols.

Next, in the present invention, the reaction of the polyester polyol (I) with the carboxylic acid anhydride or polyvalent carboxylic acid is performed as follows.

That is, the polyester polyol (I) can be produced by reacting hydroxyl groups of the polyester polyol (I) with the polyvalent carboxylic acid or anhydride thereof. The ratio of the polyester polyol (I) to the polyvalent carboxylic acid is preferably determined so that 1/3 or less of the hydroxyl groups of the polyester polyol (I) react with the polyvalent carboxylic acid because the resin (A) after the reaction is required to have two or more hydroxyl groups. The carboxylic anhydride or polyvalent carboxylic acid used is not particularly limited but a di- or trivalent carboxylic acid anhydride is preferably used in view of gelling during the reaction of the polyester polyol (I) with the polyvalent carboxylic acid. Usable examples of the divalent carboxylic acid anhydride include succinic acid anhydride, maleic acid anhydride, 1,2-cyclohexanedicarboxylic acid anhydride, 4-cyclohexene-1,2-dicarboxylic acid anhydride, 5-norbornene-2,3-dicaroboxylic acid anhydride, phthalic acid anhydride, 2,3-naphthalenedicarboxylic acid anhydride, and the like; and usable examples of the trivalent carboxylic acid anhydride include trimellitic acid anhydride and the like.

The polyester polyol (b1-1) preferably has a hydroxyl value of 20 to 250 and an acid value of 20 to 200. The hydroxyl value can be measured by a hydroxyl value measurement method described in JIS-K0070, and the acid value can be measured by an acid value measurement method described in JIS-K0070. When the hydroxyl value is less than 20 mgKOH/g, viscosity is excessively increased due to the excessively high molecular weight, and thus good coating applicability cannot be obtained. Conversely, when the hydroxyl value exceeds 250 mgKOH/g, the crosslinking density of a cured coating film is excessively increased due to the excessively low molecular weight, and thus good adhesive strength cannot be obtained. When the acid value is less than 20 mgKOH/g, intermolecular interaction is decreased, and thus the good oxygen or water-vapor barrier properties and good initial cohesive force cannot be obtained. Conversely, when the acid value exceeds 200 mgKOH/g, the reaction of the resin (b1) with the isocyanate compound (B) excessively rapidly proceeds, and thus good coating applicability cannot be obtained.

[Polyester polyol (b1-2) having polymerizable carbon-carbon double bond]

A further example of the polyester polyol (b1-2) of the present invention is one having a polymerizable carbon-carbon double bond in its molecule.

The polyester polyol (b1-2) used in the present invention can be produced by reacting a polyvalent carboxylic acid with a polyhydric alcohol, and a polymerizable carbon-carbon double bond can be introduced into the molecule of the polyester polyol (b1-2) by using a component having a polymerizable carbon-carbon double bond as each of the polyvalent carboxylic acid and polyhydric alcohol components.

(Polyvalent carboxylic acid)

Examples of the polyvalent carboxylic acid component of the polyester polyol (b1-2) of the present invention include aliphatic polyvalent carboxylic acids such as succinic acid, adipic acid, azelaic acid, sebacic acid, dodecane dicarboxylic acid, and the like; alicyclic polyvalent carboxylic acids such as 1,3-cyclopentane dicarboxylic acid, 1,4-cyclohexane dicarboxylic acid, and the like; aromatic polyvalent carboxylic acids such as orthophthalic acid, terephthalic acid, isophthalic acid, pyromellitic acid, trimellitic acid, 1,4-naphthalenedicarboxylic acid, 2,5-naphthalenedicarboxylic acid, 2,6-naphthalenedicarboxylic acid, naphthalic acid, biphenyldicarboxylic acid, 1,2-bis(phenoxy)ethane-p,p'-dicarboxylic acid, and anhydrides or ester forming derivatives of these dicarboxylic acids; and polybasic acids such as p-hydroxybenzoic acid, p-(2-hydroxyethoxy)benzoic acid, ester-forming derivatives of these dihydroxycarboxylic acids, and the like. These can be used alone or as a mixture of two or more. Also, anhydrides of these polyvalent carboxylic acids can be used. Among these, succinic acid, 1,3-cyclopentane dicarboxylic acid, orthophthalic acid, orthophthalic acid anhydride, and isophthalic acid are preferred, and orthophthalic acid and anhydride thereof are more preferred for obtaining the barrier properties.

(Polyvalent carboxylic acid having polymerizable carbon-carbon double bond)

Examples of the polyvalent carboxylic acid having a polymerizable carbon-carbon double bond as a polyvalent carboxylic acid include maleic anhydride, maleic acid, fumaric acid, 4-cyclohexene-1,2-dicarboxylic acid and anhydride thereof, 3-methyl-4-cyclohexene-1,2-dicartocylic acid and anhydride thereof, and the like. Among these, maleic anhydride, maleic acid, and fumaric acid are preferred because it is estimated that with decreasing number of carbon atoms, a molecular chain does not become excessively flexible and oxygen hardly permeates.

(Polyhydric alcohol component)

Examples of the polyhydric alcohol used in the present invention include aliphatic diols such as ethylene glycol, propylene glycol, butylene glycol, neopentyl glycol, cyclohexane dimethanol, 1,5-pentanediol, 3-methyl-1,5-pentanediol, 1,6-hexanediol, methylpentanediol, dimethylbutanediol, butylethylpropanediol, diethylene glycol triethylene glycol, tetraethylene glycol, dipropylene glycol, and tripropylene glycol; aromatic polyhydric phenols such as hydroquinone, resorcinol, catechol, naphthalenediol, biphenol, bisphenol A, bisphenol F, tetramethylbiphenol, and ethylene oxide extension products and hydrogenated alicyclic compounds of these polyhydric alcohols. Among these, ethylene glycol, propylene glycol, butylene glycol, neopentyl glycol, and cyclohexanedimethanol are preferred, and ethylene glycol is more preferred because it is estimated that with decreasing number of carbon atoms between oxygen atoms, a molecular chain does not become excessively flexible and oxygen hardly permeates.

(Polyhydric alcohol having polymerizable carbon-carbon double bond)

Examples of the polyhydric alcohol having a polymerizable carbon-carbon double bond as the polyhydric alcohol include 2-butene-1,4-diol and the like.

In the polyester polyol (b1-2), a polymerizable double bond is introduced into the polyester polyol (b1-2) by using the polyvalent carboxylic acid and polyhydric alcohol each having a polymerizable carbon-carbon double bond, but a polymerizable double bond may be introduced by reacting a polyester polyol having a hydroxyl group with a carboxylic acid or carboxylic acid anhydride having a polymerizable double bond. In this case, a carboxylic acid having a polymerizable double bond such as maleic acid, maleic anhydride, fumaric acid, or the like, or an unsaturated fatty acid such as oleic acid, sorbic acid, or the like can be used as the carboxylic acid. In this case, a polyester polyol having two or more hydroxyl groups is preferred as the polyester polyol, but the polyester polyol preferably has three or more hydroxyl groups in view of molecular extension by crosslinking with the isocyanate compound. When the polyester polyol has one or two hydroxyl groups, the polyester polyol (b1-2) produced by reaction with the carboxylic acid having a polymerizable double bond has no or one hydroxyl group, and molecular extension by reaction with the isocyanate compound (b2) little occurs, thereby causing difficulty in achieving characteristics such as laminate strength and seal strength as an adhesive, heat resistance, and the like.

The polyester polyol (b1-2) preferably has a hydroxyl value of 20 to 250 mgKOH/g and an acid value of 0 to 200 mgKOH/g. The hydroxyl value can be measured by a hydroxyl value measurement method described in JIS-K0070, and the acid value can be measured by an acid value measurement method described in JIS-K0070. When the hydroxyl value is less than 20 mgKOH/g, viscosity is excessively increased due to the excessively high molecular weight, and thus good coating applicability cannot be obtained. Conversely, when the hydroxyl value exceeds 250 mgKOH/g, the crosslinking density of a cured coating film is excessively increased due to the excessively low molecular weight, and thus good adhesive strength cannot be obtained.

The amount of a monomer component having a polymerizable carbon-carbon double bond is 5 to 60 parts by mass relative to 100 parts by mass of all monomer components constituting the polyester polyol (b1-2).

The amount smaller than this range decreases the number of crosslinking points between polymerizable double bonds and causes difficulty in achieving the barrier properties, while the amount larger than the range increases the number of crosslinking points and significantly degrades the flexibility of a cured coating film, thereby undesirably causing difficulty in achieving laminate strength.

In this application, the amount (double bond component ratio) of the monomer component having a polymerizable carbon-carbon double bond in the polyester polyol (b1-2) is calculated by using expression (a) below.
[Math. 2]

$$\text{Double bond component ratio} = \text{mass of double bond component (monomer)/mass of all components (monomers)} \times 100 \quad (a)$$

The term "monomer" represents the polyvalent carboxylic acid and polyhydric alcohol.

Also, drying oil or semi-drying oil can be used as the polyester polyol (b1-2) of the present invention. Examples of the drying oil or semi-drying oil include known common drying oils and semi-drying oils each having a carbon-carbon double bond, and the like.

[Polyester polyol (b1-3) having glycerol skeleton]

A further example of the polyester polyol (b1-3) of the present invention is a polyester polyol having a glycerol skeleton represented by general formula (1).

[Chem. 1]

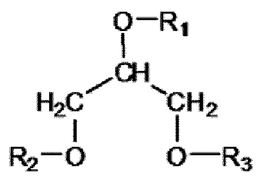

(1)

(In the formula (1), $R_1$ to $R_3$ each independently represent a hydrogen atom or a group represented by general formula (2),

[Chem. 2]

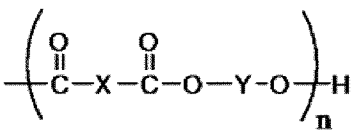

(2)

(in the formula (2), n represents an integer of 1 to 5, X represents an arylene group which may have a substituent and is selected from the group consisting of a 1,2-phenylene group, a 1,2-naphthylene group, a 2,3-naphthylene group, a 2,3-anthraquinonediyl group, and a 2,3-anthracenediyl group, and Y represents an alkylene group having 2 to 6 carbon atoms). At least one of $R_1$ to $R_3$ represents a group represented by the general formula (2)).

It is necessary that at least one of $R_1$, $R_2$, and $R_3$ in the general formula (1) is a group represented by the general formula (2). In particular, all of $R_1$, $R_2$, and $R_3$ are preferably groups represented by the general formula (2).

Also, there may be used a mixture containing any two or more of a compound in which any one of $R_1$, $R_2$, and $R_3$ is a group represented by the general formula (2), a compound in which any two of $R_1$, $R_2$, and $R_3$ are groups represented by the general formula (2), and a compound in which all of $R_1$, $R_2$, and $R_3$ are groups represented by the general formula (2).

Further, X represents an arylene group which may have a substituent and is selected from the group consisting of a 1,2-phenylene group, a 1,2-naphthylene group, a 2,3-naphthylene group, a 2,3-anthraquinonediyl group, and a 2,3-anthracenediyl group. When X is substituted by a substituent, X may be substituted by one or a plurality of substituents, and the substituent is bonded any carbon atom different from a free radical on X. Examples of the substituent include a chloro group, a bromo group, a methyl group, an ethyl group, an i-propyl group, a hydroxyl group, a methoxy group, an ethoxy group, a phenoxy group, a methylthio group, a phenylthio group, a cyano group, a nitro group, an amino group, a phthalimide group, a carboxyl group, a carbamoyl group, an N-ethylcarbamoyl group, a phenyl group, a naphthyl group, and the like.

In the general formula (2), Y represents an alkylene group having 2 to 6 carbon atoms, such as an ethylene group, a propylene group, a butylene group, a neopentylene group, a 1,5-pentylene group, a 3-methyl-1,5-pentylene group, a 1,6-hexylene group, a methylpentylene group, a dimethylbutylene group, or the like. In particular, Y is preferably a propylene group or an ethylene group and most preferably an ethylene group.

A polyester resin compound having a glycerol skeleton represented by the general formula (1) is produced by reacting glycerol with an aromatic polyvalent carboxylic acid or anhydride thereof substituted in ortho-position by carboxylic acid and a polyhydric alcohol component as essential components.

Examples of the aromatic polyvalent carboxylic acid substituted in ortho-position by carboxylic acid or anhydride thereof include orthophthalic acid or anhydride thereof, naphthalene 2,3-dicarboxylic acid or anhydride thereof, naphthalene 1,2-dicarboxylic acid or anhydride thereof, anthraquinone 2,3-dicarboxylic acid or anhydride thereof, 2,3-anthracene carboxylic acid or anhydride thereof, and the like. These compounds may have substituents at any carbon atoms of aromatic rings. Examples of the substituents include a chloro group, a bromo group, a methyl group, an ethyl group, an i-propyl group, a hydroxyl group, a methoxy group, an ethoxy group, a phenoxy group, a methylthio group, a phenylthio group, a cyano group, a nitro group, an amino group, a phthalimide group, a carboxyl group, a carbamoyl group, an N-ethylcarbamoyl group, a phenyl group, a naphthyl group, and the like.

Also, an alkylenediol having 2 to 6 carbon atoms can be used as the polyhydric alcohol component. Examples thereof include diols such as ethylene glycol, propylene glycol, butylene glycol, neopentyl glycol, 1,5-pentanediol, 3-methyl-1,5-pentanediol, 1,6-hexanediol, methylpentanediol, dimethylbutanediol, and the like.

In the present application, the content of the glycerol skeleton is calculated as the content of a residue ($C_3H_5O_3$ = 89.07) after removal of $R_1$ to $R_3$ in the general formula (1) relative to the mass of total solid content in an organic resin composition for the oxygen or water-vapor barrier adhesive of the present application, according to expression (b) below.
[Math. 3]

$${[(\text{Number of moles of glycerol skeleton contained in one molecule of P} \times 89.07/\text{number-average molecular weight of one molecule of P})] \times \text{weight of P used/total weight of solid content in organic resin composition for gas barrier adhesive}} \times 100 \quad (b)$$

P: represents the polyester polyol (b1-3) having a glycerol skeleton

The present invention is characterized in that in order to exhibit the high barrier properties, the organic resin composition for the oxygen or water-vapor barrier adhesive has 5% by mass or more of the glycerol residue.

(Method for calculating mass of solid content in organic resin composition for oxygen or water-vapor barrier adhesive)

The mass obtained by subtracting the mass of a dilution solvent, the mass of a volatile component contained in a curing agent, and an inorganic component from the parts by mass of the organic resin composition for the oxygen or water-vapor barrier adhesive is regarded as the mass of total solid content in the organic resin composition for the oxygen or water-vapor barrier adhesive.

On the other hand, the aromatic polyvalent carboxylic acid or anhydride thereof substituted in ortho-position by an acyl group used as a raw material of the polyester component has a skeleton with an asymmetric structure. Therefore, it is estimated that rotation suppression of the molecular chain of the resultant polyester occurs, thereby causing the excellent oxygen or water-vapor barrier properties.

It is also estimated that the asymmetric structure causes low crystallinity which inhibits the adhesion to a base material, thereby causing high solubility in solvents, such as ethyl acetate, methyl ethyl ketone, and the like, and the excellent oxygen or water-vapor barrier properties.

(Polyhydric alcohol)

The polyester polyol (b1-3) used in the present invention may be copolymerized with a polyhydric alcohol component as the polyhydric alcohol other than the alkylene diol having 2 to 6 carbon atoms within a range in which the effect of the present invention is not impaired. Examples of the polyhydric alcohol component include aliphatic polyhydric alcohols such as glycerol, erythritol, pentaerythritol, dipentaerythritol, diethylene glycol, triethylene glycol, tetraethylene glycol, dipropylene glycol, tripropylene glycol, tetraethylene glycol, tripropylene glycol, and the like; alicyclic polyhydric

alcohols such as cyclohexane dimethanol, tricyclodecane dimethanol, and the like; aromatic polyhydric phenols such as hydroquinone, resorcinol, catechol, naphthalenediol, biphenol, bisphenol A, bisphenol F, tetramethylbiphenol, and the like, and ethylene oxide extension products and hydrogenated alicyclic compounds of these polyhydric alcohols.

(Polyvalent carboxylic acid)

In the polyester polyol (b1-3) of the present invention, the aromatic polyvalent carboxylic acid or anhydride thereof substituted in ortho-position by carboxylic acid is essential as the polyvalent carboxylic acid component, but another polyvalent carboxylic acid component may be copolymerized within a range in which the effect of the present invention is not impaired. Examples thereof include aliphatic polyvalent carboxylic acids such as succinic acid, adipic acid, azelaic acid, sebacic acid, dodecanedicarboxylic acid, and the like; unsaturated bond-containing polyvalent carboxylic acids such as maleic anhydride, maleic acid, fumaric acid, and the like; alicyclic polyvalent carboxylic acids such as 1,3-cyclopentanedicarboxylic acid, 1,4-cyclohexanedicarboxylic acid, and the like; aromatic polyvalent carboxylic acids such as terephthalic acid, isophthalic acid, pyromellitic acid, trimellitic acid, 1,4-naphthalenedicarboxylic acid, 2,5-naphthalenedicarboxylic acid, 2,6-naphthalenedicarboxylic acid, naphthalic acid, biphenyldicarboxylic acid, diphenic acid and anhydride thereof, 1,2-bis(phenoxy)ethane-p,p'-dicarboxylic acid, and anhydrides or ester-forming derivatives of these dicarboxylic acids; and polybasic acids such as p-hydroxybenzoic acid, p-(2-hydroxyethoxy)benzoic acid, ester-forming derivatives of these dihydroxycarboxylic acids, and the like. These can be used alone or as a mixture of two or more.

Among these, succinic acid, 1,3-cyclopentanedicarboxylic acid, isophthalic acid, 2,6-naphthalene dicarboxylic acid, 1,8-naphthalic acid, and diphenic acid are preferred.

[Polyester polyol (b1-4) produced by polycondensation of ortho-oriented polyvalent carboxylic acid component with polyhydric alcohol component]

The polyester polyol (b1-4) used in the present invention includes a polyvalent carboxylic acid component containing at least one of orthophthalic acid and anhydride thereof and a polyhydric alcohol component containing at least one selected from the group consisting of ethylene glycol, propylene glycol, butylene glycol, neopentyl glycol, and cyclohexane dimethanol. In particular, the polyester polyol preferably contains the orthophthalic acid or anhydride thereof at a content of 70% to 100% by mass relative to the whole polyvalent carboxylic acid component.

(Polyvalent carboxylic acid and other component)

In the polyester polyol (b1-4) of the present invention, the orthophthalic acid or anhydride thereof is essential as the polyvalent carboxylic acid component, but another polyvalent carboxylic acid component may be copolymerized within a range in which the effect of the present invention is not impaired. Examples thereof include aliphatic polyvalent carboxylic acids such as succinic acid, adipic acid, azelaic acid, sebacic acid, dodecanedicarboxylic acid, and the like; unsaturated bond-containing polyvalent carboxylic acids such as maleic anhydride, maleic acid, fumaric acid, and the like; alicyclic polyvalent carboxylic acids such as 1,3-cyclopentanedicarboxylic acid, 1,4-cyclohexanedicarboxylic acid, and the like; aromatic polyvalent carboxylic acids such as terephthalic acid, isophthalic acid, pyromellitic acid, trimellitic acid, 1,4-naphthalenedicarboxylic acid, 2,5-naphthalenedicarboxylic acid, 2,6-naphthalenedicarboxylic acid, naphthalic acid, biphenyldicarboxylic acid, 1,2-bis(phenoxy)ethane-p,p'-dicarboxylic acid, and anhydrides or ester-forming derivatives of these dicarboxylic acids; and polybasic acids such as p-hydroxybenzoic acid, p-(2-hydroxyethoxy)benzoic acid, ester-forming derivatives of these dihydroxycarboxylic acids, and the like. These can be used alone or as a mixture of two or more. Among these, succinic acid, 1,3-cyclopentanedicarboxylic acid, and isophthalic acid are preferred.

Examples of the polyhydric alcohol component and other components include those described above.

[Polyester polyol (b1-5) having isocyanuric ring]

The resin (b1) of the present invention more preferably contains the polyester polyol (b1-5) having an isocyanuric ring represented by general formula (3) below.

[Chem. 3]

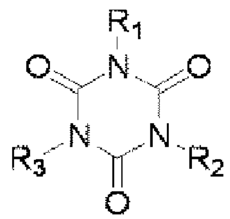

(3)

(In the general formula (3), $R_1$ to $R_3$ each independently represent $-(CH_2)n1-OH$ (wherein n1 represents an integer of 2 to 4) or a group represented by general formula (4)

[Chem. 4]

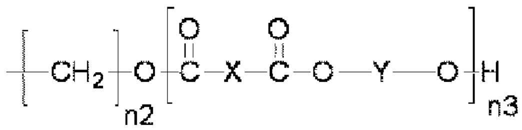

(4)

(in the general formula (4), n2 represents an integer of 2 to 4, n3 represents an integer of 1 to 5, X represents an arylene group which may have a substituent and is selected from the group consisting of a 1,2-phenylene group, a 1,2-naphthylene group, a 2,3-naphthylene group, a 2,3-anthraquinonediyl group, and a 2,3-anthracenediyl group, and Y represents an alkylene group having 2 to 6 carbon atoms). At least one of $R_1$, $R_2$, and $R_3$ represents a group represented by the general formula (4)).

In the general formula (3), an alkylene group represented by $-(CH_2)n1-$ may be either linear or branched. In particular, n1 is preferably 2 or 3 and most preferably 2.

In the general formula (4), n2 represents an integer of 2 to 4, and n3 represents an integer of 1 to 5.

X represents an arylene group which may have a substituent and is selected from the group consisting of a 1,2-phenylene group, a 1,2-naphthylene group, a 2,3-naphthylene group, a 2,3-anthraquinonediyl group, and a 2,3-anthracenediyl group.

When X is substituted by a substituent, X may be substituted by one or a plurality of substituents, and the substituent is bonded to any carbon atom different from a free radical on X. Examples of the substituent include a chloro group, a bromo group, a methyl group, an ethyl group, an i-propyl group, a hydroxyl group, a methoxy group, an ethoxy group, a phenoxy group, a methylthio group, a phenylthio group, a cyano group, a nitro group, an amino group, a phthalimide group, a carboxyl group, a carbamoyl group, an N-ethylcarbamoyl group, a phenyl group, a naphthyl group, and the like.

In particular, the substituent of X is preferably a hydroxyl group, a cyano group, a nitro group, an amino group, a phthalimide group, a carbamoyl group, an N-ethylcarbamoyl group, or a phenyl group, and most preferably a hydroxyl group, a phenoxy group, a cyano group, a nitro group, a phthalimide group, or a phenyl group,

In the general formula (4), Y represents an alkylene group having 2 to 6 carbon atoms, such as an ethylene group, a propylene group, a butylene group, a neopentylene group, a 1,5-pentylene group, a 3-methyl-1,5-pentylene group, a 1,6-hexylene group, a methylpentylene group, a dimethylbutylene group, or the like. In particular, Y is preferably a propylene group or an ethylene group and most preferably an ethylene group.

In the general formula (3), at least one of $R_1$, $R_2$, and $R_3$ is a group represented by the general formula (4). In particular, all of $R_1$, $R_2$, and $R_3$ are preferably groups represented by the general formula (4).

Also, there may be used a mixture containing any two or more of a compound in which any one of $R_1$, $R_2$, and $R_3$ is a group represented by the general formula (4), a compound in which any two of $R_1$, $R_2$, and $R_3$ are groups represented by the general formula (4), and a compound in which all of $R_1$, $R_2$, and $R_3$ are groups represented by the general formula (4).

The polyester polyol (b1-5) having an isocyanuric ring represented by the general formula (3) is produced by reacting triol having an isocyanuric ring with an aromatic polyvalent carboxylic acid or anhydride thereof substituted in ortho-position by carboxylic acid and a polyhydric component as essential components.

Examples of the triol having an isocyanuric ring include alkylene oxide adducts of isocyanuric acid, such as 1,3,5-tris(2-hydroxyethyl)isocyanuric acid, 1,3,5-tris(2-hydroxypropyl)isocyanuric acid, and the like.

Examples of the aromatic polyvalent carboxylic acid or anhydride thereof substituted in ortho-position by carboxylic acid include orthophthalic acid or anhydride thereof, naphthalene-2,3-dicarboxylic acid or anhydride thereof,

naphthalene-1,2-dicarboxylic acid or anhydride thereof, anthraquinone-2,3-dicarboxylic acid or anhydride thereof, and 2,3-anthracenecarboxylic acid or anhydride thereof. These compounds may have a substituent at any carbon atom on an aromatic ring.

Examples of the substituent include a chloro group, a bromo group, a methyl group, an ethyl group, an i-propyl group, a hydroxyl group, a methoxy group, an ethoxy group, a phenoxy group, a methylthio group, a phenylthio group, a cyano group, a nitro group, an amino group, a phthalimide group, a carboxyl group, a carbamoyl group, an N-ethylcarbamoyl group, a phenyl group, a naphthyl group, and the like.

Also, an alkylenediol having 2 to 6 carbon atoms can be used as the polyhydric alcohol component. Examples thereof include diols such as ethylene glycol, propylene glycol, butylene glycol, neopentyl glycol, 1,5-pentanediol, 3-methyl-1,5-pentanediol, 1,6-hexanediol, methylpentanediol, dimethylbutanediol, and the like.

In particular, because of the excellent oxygen or water-vapor barrier properties and adhesion, preferred is a polyester polyol compound having an isocyanuric ring and using 1,3,5-tris(2-hydroxyethyl)isocyanuric acid or 1,3,5-tris(2-hydroxypropyl)isocyanuric acid as the triol compound having an isocyanuric ring, orthophthalic acid anhydride as the aromatic polyvalent carboxylic acid or anhydride thereof substituted in ortho-position by carboxylic acid, and ethylene glycol as the polyhydric alcohol.

An isocyanuric ring has high polarity and trifunctionality. Therefore, this can increase polarity of the whole system and increase the crosslinking density. From this viewpoint, the content of an isocyanuric ring is preferably 5% by mass or more relative to the whole solid content in the adhesive resin.

The reason why the oxygen or water-vapor barrier properties and the dry laminate adhesion can be secured by the adhesive having an isocyanuric ring of the present invention is estimated as follows.

An isocyanuric ring has high polarity and does not form a hydrogen bond. A method generally known as a method for enhancing adhesion is to mix a high-polarity functional group, such as a hydroxyl group, a urethane bond, a ureide bond, an amide bond, or the like. However, a resin having such a bond easily forms an intermolecular hydrogen bond and thus the solubility in ethyl acetate or 2-butanone solvent frequently used for a dry laminate adhesive may be degraded. However, the solubility of the polyester resin having an isocyanuric ring is not degraded and thus the polyester resin can be easily diluted.

Also, an isocyanuric ring is trifunctional, and thus a high crosslinking density can be obtained by the polyester polyol compound having an isocyanuric ring as a center of a resin skeleton and a polyester skeleton having a specific structure in a branch chain. It is estimated that increasing the crosslinking density can decrease gaps through which gas such as oxygen passes. It is also estimated that an isocyanuric ring does not form an intermolecular hydrogen bond and has high polarity and causes a high crosslinking density, and thus the oxygen or water-vapor barrier properties and the dry laminate adhesion can be secured.

In the present application, the content of an isocyanuric ring is calculated as the content of a residue ($C_3N_3O_3$ = 126.05) after removal of $R_1$ to $R_3$ in the general formula (3) relative to the mass of total solid content in the adhesive resin of the present application, according to expression (c) below.

[Math. 4]

{[(Number of moles of isocyanuric ring contained in one molecule of P × 126.05/number-average molecular weight of one molecule of P)] × weight of P used/total weight of solid content in organic resin composition for gas-barrier adhesive} × 100 (c)

P: represents the polyester polyol (b1-5) having an isocyanuric ring

(Method for calculating the mass of total solid content in organic resin composition for oxygen or water-vapor barrier adhesive)

The mass obtained by subtracting the mass of a dilution solvent, the mass of a volatile component contained in a curing agent, and an inorganic component from the parts by mass of the resin composition for the oxygen or water-vapor barrier adhesive is regarded as the mass of total solid content in the organic resin for the oxygen or water-vapor barrier adhesive.

The polyester polyol having an isocyanuric ring can be produced by a known method for producing polyester.

Specifically, the polyester polyol can be synthesized by a production method of performing reaction in the presence of a catalyst at a reaction temperature of 200°C to 220°C while removing the produced water to the outside of the system.

As a specific example, the triol having an isocyanuric ring, the aromatic polyvalent carboxylic acid or anhydride thereof substituted in ortho-position by carboxylic acid, and the polyhydric alcohol component, which are used as raw materials, are charged together and heated under stirring and mixing to be subjected to dehydration condensation reaction. The intended polyester polyol can be produced by continuing the reaction until an acid value measured by an acid value measurement method described in JIS-K0070 is 1 mgKOH/g or less, and a hydroxyl value Z mgKOH/g measured by a hydroxyl value measurement method described in JIS-K0070 is within a range of ±5% of a value (mgKOH/g) on the right side of expression (d) below.

[Meth. 5]

$$Z = 3/(\text{molecular weight of potassium hydroxide}) \times 1000 \times Mn) \qquad (d)$$

(In the expression (d), Mn represents the set number-average molecular weight of a given trifunctional polyester resin.)

Alternatively, the raw materials may be divided and reacted in multiple stages. Also, the hydroxyl value may be adjusted to be within a range of ±5% while adding the diol component evaporated at the reaction temperature.

Examples of the catalyst used in the reaction include acid catalysts: tin-based catalysts such as monobutyltin oxide, dibutyltin oxide, and the like; titanium-based catalysts such as tetra-isopropyl titanate, tetra-butyl titanate, and the like; and zirconia-based catalysts such as tetra-butyl zirconate and the like. It is preferred to use a combination of the titanium-based catalyst such as tetra-isopropyl titanate, tetra-butyl titanate, or the like and the zirconia catalyst, which have high activity for ester reaction. The amount of the catalyst used is 1 to 1000 ppm and more preferably 10 to 100 ppm relative to the total mass of the reaction raw materials used. The amount of less than 1 ppm cannot easily provide the effect as the catalyst, while the amount exceeding 1000 ppm tends to inhibit the subsequent urethanization reaction.

An example of the polyether polyol is one produced by a normal method for addition polymerization of one or two or more monomers such as ethylene oxide, propylene oxide, butylene oxide, styrene oxide, epichlorohydrin, cyclohexylene, and the like using, as an initiator, one or two or more compounds each having two active hydrogen atoms, such as ethylene glycol, diethylene glycol, triethylene glycol, propylene glycol, trimethylene glycol, 1,3-butanediol, 1,4-butanediol, 1,6-hexanediol, neopentyl glycol, and the like. If required, polyoxyalkylene monoalkyl ether may be combined, which is produced by block or random polymerization of ethylene oxide as an essential component with at least one monomer of propylene oxide, butylene oxide, styrene oxide, epichlorohydrin, cyclohexylene, and the like, using alkyl alcohol having 1 to 4 carbon atoms as an initiator. Further, polytetramethylene glycol can be used as the polyether polyol. The polytetramethylene glycol is a polyol produced by ring-opening polymerization of tetrahydrofuran. Also, a similar compound produced by partially substituting tetrahydrofuran with ethylene oxide or propylene oxide during synthesis of the polytetramethylene glycol can be used or can be used in combination with the polytetramethylene glycol.

The number-average molecular weight of the resin (b1) is particularly preferably 450 to 5000 because such a crosslinking density as to provide excellent balance between the adhesiveness and the oxygen barrier function can be obtained. The number-average molecular weight is more preferably 500 to 3,000. Also, the curing agent is most preferably polyisocyanate described below which can impart a proper reaction time and causes particularly the excellent adhesive strength and oxygen barrier function. With the molecular weight of less than 450, the cohesive force of the adhesive during coating is excessively decreased, thereby causing defects such as film misalignment during lamination and floating of the laminated films. Conversely, the molecular weight of higher than 5,000 causes a problem that coating cannot be performed due to excessively high viscosity during coating and lamination cannot be performed due to low adhesiveness. The number-average molecular weight was determined by calculation from the determined hydroxyl value and the number of functional hydroxyl groups in design.

The glass transition temperature of the resin (b1) used in the present invention is preferably within a range of - 30°C to 80°C and more preferably 0°C to 60°C. The glass transition temperature is still more preferably 25°C to 60°C. With the glass transition temperature excessively higher than 80°C, flexibility of the polyester polyol near room temperature is decreased, and thus the adhesion to the base material may be degraded, thereby decreasing adhesive force. While with the glass transition temperature excessively lower than -30°C, the satisfactory oxygen or water-vapor barrier properties may not be exhibited due to the violet molecular motion of the polyester polyol near room temperature.

Further, polyester polyurethane polyol or polyether polyurethane polyol having a number-average molecular weight of 1,000 to 15,000 obtained by urethane extension by reaction of the resin (b1) with the isocyanate compound (b2) may be used as the adhesive. The polyol has a component having a predetermined molecular weight or more and a urethane bond, and thus has the excellent oxygen or water-vapor barrier properties and the excellent initial cohesive

force and is excellent as the adhesive used for lamination. Also, when the ratio of the isocyanate group in the isocyanate compound (b2) is excessive as compared with that of the hydroxyl groups in the resin (b1), the polyol having isocyanate groups at the terminals can be produced and it may be used as a curing agent.

[Isocyanate compound (b2) having two or more isocyanate groups as functional groups in one molecule]

The isocyanate compound (b2) having two or more isocyanate groups as functional groups in one molecule used in the present invention is not particularly limited it is a curing agent which can react with the hydroxyl groups in the resin (b1), and a known curing agent such as a diisocyanate compound, a polyisocyanate compound, an epoxy compound, or the like can be used. Among these, a polyisocyanate compound is preferably used from the viewpoint of adhesion and retorting resistance.

Examples of the polyisocyanate compound include aromatic and aliphatic diisocyanates and tri- or higher-valent polyisocyanate compounds, and either a low molecular compound or a high molecular compound may be used. Examples thereof include tetramethylene diisocyanate, hexamethylene diisocyanate, toluene diisocyanate, diphenylmethane diisocyanate, hydrogenated diphenylmethane diisocyanate, xylylene diisocyanate, hydrogenated xylylene diisocyanate, isophorone diisocyanate, and trimers of these isocyanate compounds; and adducts produced by reacting excessive amounts of the isocyanate compounds with a low-molecular active hydrogen compound or alkylene oxide adduct thereof such as ethylene glycol, propylene glycol, meta-xylylene alcohol, 1,3-bishydroxyethylbenzene, 1,4-bishydroxyethylbenzene, trimethylolpropane, glycerol, pentaerythritol, erythritol, sorbitol, ethylenediamine, monoethanolamine, diethanolamine, triethanolamine, meta-xylylenediamine, or an alkylene oxide adduct thereof, or a high-molecular active-hydrogen compound such as any one of various polyester resins, polyether polyols, and polyamides.

The isocyanate compound may be a blocked isocyanate. Examples of an isocyanate blocking agent include phenols such as phenol, thiophenol, methylthiophenol, ethylthiophenol, cresol, xylenol, resorcinol, nitrophenol, chlorophenol, and the like; oximes such as acetoxime, methylethylketoxime, cyclohexanone oxime, and the like; alcohols such as methanol, ethanol, propanol, butanol, and the like; halogen-substituted alcohols such as ethylene chlorohydrin, 1,3-dichloro-2-propanol, and the like; tertiary alcohols such as tert-butanol, tert-pentanol, and the like; and lactams such as ε-caprolactam, δ-valerolactam, γ-butyrolactam, β-propyrolactam, and the like. Other examples include active methylene compounds such as aromatic amines, imides, acetylacetone, acetoacetate esters, ethyl malonate ester, and the like; mercaptanes, imines, ureas, diaryl compounds, sodium hydrogen sulfite, and the like. The blocked isocyanate can be produced by addition reaction of the isocyanate compound with the isocyanate blocking agent according to a known common proper method.

Among these, xylylene diisocyanate, hydrogenated xylylene diisocyanate, toluene diisocyanate, and diphenylmethane diisocyanate are preferred for obtaining the good oxygen or water-vapor barrier properties, and meta-xylylene diisocyanate, hydrogenated meta-xylylene diisocyanate are most preferred.

The glass transition temperature of a cured coating film of the resin (b1) and the isocyanate compound (b2) of the present invention is preferably within a range of -30°C to 80°C and more preferably 0°C to 70°C. The glass transition temperature is still more preferably 25°C to 70°C. With the glass transition temperature higher than 80°C, flexibility of the cured coating film near room temperature is decreased, and thus the adhesion to the base material may be degraded, thereby decreasing adhesive force. While with the glass transition temperature lower than -30°C, the satisfactory oxygen or water-vapor barrier properties may not be exhibited due to the violet molecular motion in the cured coating film near room temperature and the adhesive force may be decreased due to insufficient cohesive force.

When carboxylic acid remains at the terminals of the resin (b1) used in the present invention, an epoxy compound can be used as the curing agent. Examples of the epoxy compound include bisphenol A diglycidyl ether and oligomer thereof, hydrogenated bisphenol A diglycidyl ether and oligomer thereof, diglycidyl orthophthalate ester, diglycidyl isophthalate ester, diglycidyl terephthalate ester, diglycidyl p-oxybenzoate ester, diglycidyl tetrahydrophthalate ester, diglycidyl hexahydrophthalate ester, diglycidyl succinate ester, diglycidyl adipate ester, diglycidyl sebacate ester, ethylene glycol diglycidyl ether, propylene glycol diglycidyl ether, 1,4-butanediol diglycidyl ether, 1,6-hexanediol diglycidyl ether, and polyalkylene glycol diglycidyl ethers, triglycidyl trimellitate ester, triglycidyl isocyanurate, 1,4-diglycidyloxybenzene, diglycidylpropylene urea, glycerol triglycidyl ether, trimethylolethane triglycidyl ether, trimethylolpropane triglycidyl ether, pentaerythritol tetraglycidyl ether, triglycidyl ether of glycerol alkylene oxide adduct, and the like.

When the epoxy compound is used as the curing agent, a general-purpose known epoxy curing accelerator may be properly added for accelerating curing within a range where the oxygen or water-vapor barrier properties as the object of the present invention are not impaired.

In particular, the curing agent is preferably a polyisocyanate compound having an aromatic ring, and the polyisocyanate compound having a meta-xylene skeleton is preferred for the reason that the oxygen or water-vapor barrier properties are improved by not only a hydrogen bond of a urethane group but also π-π stacking between aromatic rings.

Examples of the polyisocyanate compound having a meta-xylene skeleton include a trimer of xylylene diisocyanate, a biuret produced by reaction with an amine, and an adduct produced by reaction with an alcohol, but the

adduct is more preferred than the trimer and the biuret for the reason that solubility of the polyisocyanate compound in an organic solvent used for a dry laminate adhesive can be easily obtained. An adduct produced by reaction with an alcohol properly selected from the low-molecular active hydrogen compounds described above can be used as the adduct. In particular, an adduct with an ethylene oxide adduct of trimethylolpropane, glycerol, triethanolamine, or meta-xylylene diamine is particularly preferred.

The resin (b1) and the isocyanate compound (b2) are preferably mixed so that the ratio of the resin (b1) to the isocyanate compound (b2), that is, the ratio of hydroxyl groups in the resin (b1) to the reaction component of the isocyanate compound (b2), is 1/0.5 to 1/10 (equivalent ratio), more preferably 1/1 to 1/5. When the component of the isocyanate compound (b2) is excessive and exceeds the range, an excessive component of the isocyanate compound (b2) remains and thus may be bled out of an adhesive layer after bonding, while when the component of the isocyanate compound (b2) is insufficient, the shortage of adhesive strength may occur.

A known polymerization catalyst can be used as the catalyst for accelerating polymerization of a polymerizable carbon double bond. A transition metal complex can be used as the polymerization catalyst. The transition metal complex is not particularly limited as long as it is a compound having the ability to oxidatively polymerize a polymerizable double bond, but various metals or complexes thereof can be used. Usable examples thereof include salts of metals, such as cobalt, manganese, lead, calcium, cerium, zirconium, zinc, iron, copper, and the like, with octylic acid, naphthenic acid, neodecanoic acid, stearic acid, resin acids, tall oil fatty acid, tung oil fatty acid, linseed oil fatty acid, soybean oil fatty acid, or the like. The amount of transition metal complex used is preferably 0 to 10 parts by mass and more preferably 0 to 3 parts by mass relative to the resin (b1).

The isocyanate compound (b2) can be combined with a known curing agent or accelerator selected according to the type. Examples of the adhesion accelerator include silane coupling agents such as hydrolysable alkoxysilane compounds and the like, titanate-based coupling agents, aluminum-based coupling agents, epoxy resins, and the like. The silane coupling agents and titanate-based coupling agents are preferred in view of improvement in adhesives for various film materials.

(Adhesive and other component)

The adhesive of the present invention may further contain various additives within a range where the adhesive force and the oxygen or water-vapor barrier properties are not impaired. Examples of the additives include inorganic fillers such as silica, alumina, aluminum flakes, glass flakes, and the like; stabilizers (antioxidant, thermal stabilizer, ultraviolet absorber, and the like), a plasticizer, an antistatic agent, a lubricant, an antiblocking agent, a coloring agent, a filler, a crystal nucleating agent, and the like.

(Plate-like inorganic compound)

The resin composition for an adhesive of the present invention may contain a plate-like inorganic compound. The plate-like inorganic compound used in the present invention has the effect of improving the laminate strength and oxygen or water-vapor barrier properties of the adhesive produced by curing the resin composition for an adhesive.

The plate-like inorganic compound used in the present invention is characterized by improving the laminate strength and the oxygen or water-vapor barrier properties because of its plate-like shape. The interlayer charge of the plate-like inorganic compound does not significantly directly affect the barrier properties, but when the plate-like inorganic compound is an ionic inorganic compound or a water-swelling inorganic compound, the dispersibility in the resin composition is significantly degraded, and an increase in addition amount causes a problem with coating applicability due to thickening and thixotropy of the resin composition. While when the plate-like inorganic compound is uncharged (nonionic) or water-non-swelling, thickening and thixotropy are little caused even by increasing the addition amount, and the coating applicability can be secured. Examples of the plate-like inorganic compound used in the present invention include hydrous silicates (phyllosilicate minerals and the like), kaolinite-serpentine group clay minerals (halloysite, kaolinite, endellite, dickite, nacrite and the like, antigorite, chrysotile, and the like), pyrophyllite-talc group (pyrophyllite, talc, kerolite, and the like), smectite group clay minerals (montmorillonite, beidellite, nontronite, saponite, hectorite, sauconite, stevensite, and the like), vermiculite group clay minerals (vermiculite and the like), mica or mica group clay minerals (mica such as muscovite, phlogopite, and the like, margarite, tetrasilylic mica, taeniolite, and the like), chlorite group (cookeite, sudoite, clinochlore, chamosite, nimite, and the like), hydrotalcite, plate-like barium sulfate, boehmite, aluminum polyphosphate, and the like. These may be either natural clay minerals or synthetic clay minerals. The inorganic layered compounds are used alone or in combination of two or more.

The plate-like inorganic compound used in the present invention is preferably nonionic without interlayer charge.

Examples of such a plate-like inorganic compound used in the present invention include kaolinite-serpentine group clay minerals (halloysite, kaolinite, endellite, dickite, nacrite and the like, antigorite, chrysotile, and the like), pyrophyllite-talc group (pyrophyllite, talc, kerolite, and the like), and the like.

The plate-like inorganic compound used in the present invention is preferably water-non-swelling.

Examples of such a plate-lie inorganic compound used in the present invention include kaolinite-serpentine group clay minerals (halloysite, kaolinite, endellite, dickite, nacrite and the like, antigorite, chrysotile, and the like), pyrophyllite-talc group (pyrophyllite, talc, kerolite, and the like), mica or mica group clay minerals (mica such as muscovite, phlogopite, and the like, margarite, tetrasilylic mica, taeniolite, and the like), chlorite group (cookeite, sudoite, clinochlore, chamosite, nimite, and the like), hydrotalcite, plate-like barium sulfate, and the like.

In the present invention, an average particle diameter represents a particle diameter with the highest frequency in a particle size distribution of a plate-like inorganic compound measured by a light scattering measuring apparatus. The average particle diameter of the plate-like inorganic compound used in the present invention is not particularly limited but is preferably 0.1 μm or more and more preferably 1 μm or more. With the average particle diameter of 0.1 μm or less, the bypass route of oxygen molecules is not elongated because the length of the long side is short, thereby causing the problem of difficulty in improving the oxygen-barrier properties and difficulty in improving the adhesive force. The larger side of the average particle diameter is not particularly limited. When the large plate-like inorganic compound contained causes defects such as stripes on a coated surface by a coating method, it is desirable to use a material preferably having an average particle diameter of 100 μm or less and more preferably 20 μm or less.

The aspect ratio of the plate-like inorganic compound used in the present invention is preferably as high as possible in order to improve the oxygen barrier function by a labyrinth effect. Specifically, the aspect ratio is preferably 3 or more, more preferably 10 or more, and most preferably 40 or more.

In the present invention, when the total mass of the resin (b1), the isocyanate compound (b2), and the plate-like inorganic compound (C) is 100 parts by mass, the content of the plate-like inorganic compound is not particularly limited as long as the oxygen barrier properties are improved, but the content is preferably 5 to 50 parts by mass. This is because with the content of 5 parts by mass or less, the barrier function is not easily improved, while with the content of 50 parts by mass or more, the adhesiveness of the coated surface is decreased, and thus there is a possibility of difficulty in a lamination operation or insufficient adhesive force.

The content (PWC (%)) of the plate-like inorganic compound (C) can be determined by expression (e) below.
[Meth. 6]

PWC (%) = content (weight of solid content) of plate-like inorganic compound (C)/(content (weight of solid content) of resin (b1) + content (weight of solid content) of isocyanate compound (b2) + content (weight of solid content) of plate-like inorganic compound (C)) × 100 (e)

A known dispersion method can be used as a method for dispersing the inorganic compound used as a material in the present invention in the resin (b1) or the resin composition for an oxygen or water-vapor barrier adhesive. Examples of the method include an ultrasonic homogenizer, a high-pressure homogenizer, a paint conditioner, a ball mill, a roll mill, a sand mill, a sand grinder, a dyno mill, Dispermat, a nano-mill, a SC mill, a nanomizer, and the like. More preferred examples include devices which can produce high shearing force, such as a Henschel mixer, a pressure kneader, a Banbury mixer, a planetary mixer, a two-roll mill, a three-roll mill, and the like. These may be used alone or in combination of two or more devices.

Also, a known acid anhydride can be combined as an additive as a method for improving the acid resistance of the adhesive layer. Examples of the acid anhydride include phthalic acid anhydride, succinic acid anhydride, Het anhydride, Himic anhydride, maleic anhydride, tetrahydrophthalic anhydride, hexahydrophthalic anhydride, tetrabromophthalic anhydride, tetrachlorophthalic anhydride, trimellitic anhydride, pyromellitic anhydride, benzophenone tetracarboxylic anhydride, 2,3,6,7-naphthaline tetracarboxylic dianhydride, 5-(2,5-oxotetrahydrofuryl)-3-methyl-3-cyclhexene-1,2-dicarboxylic anhydride, styrenemaleic anhydride copolymer, and the like.

Also, if required, a compound having an oxygen capturing function or the like may be added. Examples of the compound having an oxygen capturing function include low-molecular organic compounds which react with oxygen, such as hindered phenols, vitamin C, vitamin E, organophosphorus compounds, gallic acid, pyrogallol, and the like; transition metal compounds of cobalt, manganese, nickel, iron, copper, and the like.

Further, if required, a tackifier such as a xylene resin, a terpene resin, a phenol resin, a rosin resin, or the like may be added for improving the adhesion to various film materials immediately after coating. When this is added, the amount is preferably within a range of 0.01 to 5 parts by mass relative to 100 parts by mass of a total amount of the

resin (b1) and the isocyanate compound (b2).

Further, active energy rays can be used as a method for reacting a polymerizable double bond. A known technique can be used as the active energy rays, and curing can be performed by irradiation with electron beams, ultraviolet light, or ionizing radiation such as $\gamma$-rays or the like. In the case of curing with ultraviolet light, a known ultraviolet irradiation device provided with a high-pressure mercury lamp, an excimer lamp, a metal halide lamp, or the like can be used.

In curing with ultraviolet irradiation, if required, a photo(polymerization) initiator which produces radicals by ultraviolet irradiation is preferably added in an amount of about 0.1 to 20 parts by mass relative to 100 parts by mass of the resin (b1).

Examples of the radical-generating type photo(polymerization) initiator include hydrogen abstraction type initiators such as benzyl, benzophenone, Michler's ketone, 2-chlorothioxanthone, 2,4-diethylthioxanthone, and the like; photocleavage type initiators such as benzoin ethyl ether, diethoxyacetophenone, benzyl methyl ketal, hydroxycyclohexyl phenyl ketone, 2-hydroxy-2-methylphenyl ketone, and the like. These can be used alone or in combination of a plurality of types.

[Form of adhesive]

The adhesive of the present invention may be the form of either a solvent type or a non-solvent type. In the case of the solvent type, a solvent may be used as a reaction solvent for producing the resin (b1) and the isocyanate (b2). Further, the solvent is used as a diluent in coating. Usable examples of the solvent include esters such as ethyl acetate, butyl acetate, cellosolve acetate, and the like; ketones such as acetone, methyl ethyl ketone, isobutyl ketone, cyclohexanone, and the like; ethers such as tetrahydrofuran, dioxane, and the like; aromatic hydrocarbons such as toluene, xylene, and the like; halogenated hydrocarbons such as methylene chloride, ethylene chloride, and the like; dimethyl sulfoxide; dimethyl sulfonamide; and the like. Among these, ethyl acetate and methyl ethyl ketone are generally preferably used. In the case of use without a solvent, solubility in an organic solvent is considered to be not necessarily required, but solubility in an organic solvent is required in view of washing of a reactor for synthesis and washing of a coating machine for lamination.

[Laminate (A1)]

The laminate (A1) of the present invention includes a sealant film having a layer configuration of film/oxygen or water-vapor barrier adhesive (B)/sealant film.

The film used is not particularly limited, a known common film can be used, and a thermoplastic resin film can be properly selected according to desired application. Examples of the film for food packaging include polyolefin films such as a PET film, a polystyrene film, a polyamide film, a polyacrylonitrile film, a polyethylene film (LDPE: low-density polyethylene film, HDPE: high-density polyethylene film), a polypropylene film (CPP: cast polypropylene film, OPP: biaxially oriented polypropylene film), and the like; a polyvinyl alcohol film; an ethylene-vinyl alcohol copolymer film; and the like. These films may be stretched. A stretching method generally includes simultaneous biaxial stretching or sequential biaxial stretching after a sheet is formed by melt-extruding a resin using an extrusion film forming method or the like.

In the case of sequential biaxial stretching, generally, longitudinal stretching is first performed, and lateral stretching is then performed. Specifically, a commonly used method includes a combination of longitudinal stretching using a speed difference between rolls and lateral stretching using a tenter. However, when a transparent vapor-deposited film having the high oxygen or water-vapor barrier properties is used on either side of the adhesive using the polyester polyol (b1-2) as an adhesive component, the polymerization of polymerizable double bonds in the polyester polyol (b1-2) used as the adhesive component may be inhibited, thereby failing to exhibit the good barrier properties. Therefore, when the polyester polyol (b1-2) is used as the adhesive component, the oxygen permeability of at least one laminate film is preferably 0.1 $cc/m^2 \cdot day \cdot atm$ or more as the oxygen or water-vapor barrier properties of an oxygen or water-vapor barrier laminated film.

Also, if required, a surface of the film may be subjected to any one of various surface treatments such as flame treatment, corona discharge treatment, and the like so that an adhesive layer without a defect such as film breaking, cissing, or the like is formed.

A known common sealant film can be used as the sealant film in the present invention and, for example, a cast polypropylene film (CPP) film, a polyethylene film (PE), or the like can be used.

The sealant film of the present invention has a structure in which a sealant layer is in contact with the oxygen or water-vapor barrier adhesive layer, and thus a component from a layer other than the sealant layer and the oxygen or water-vapor barrier adhesive layer constituting the multilayer film can be prevented from reaching contents through the sealant layer.

The adhesive described above can be used as the oxygen or water-vapor barrier adhesive (B), and the oxygen or water-vapor barrier adhesive (B) can be used by coating the film or the sealant film. The coating method is not particularly limited, and a known method may be used. For example, in the case of the solvent type in which the viscosity can be adjusted, coating is often performed by a gravure roll coating method or the like. In the case of the non-solvent type unsuitable for gravure roll coating because of the high viscosity at room temperature, coating can be performed by a roll coater under heating. When a roll coater is used, coating is preferably performed under heating from room temperature to about 120°C so that the viscosity of the adhesive of the present invention is about 500 to 2500 mPa·s.

[Laminate (A2)]

The laminate (A2) is characterized by having a configuration of base film/adhesive/laminate (A1).

A known common film can be used as the base film in the laminate (A2).

The film used is not particularly limited, a known common film can be used, and a thermoplastic resin film can be properly selected according to desired application. Examples of the film for food packaging include polyolefin films such as a PET film, a polystyrene film, a polyamide film, a polyacrylonitrile film, a polyethylene film (LDPE: low-density polyethylene film, HDPE: high-density polyethylene film), a polypropylene film (CPP: cast polypropylene film, OPP: biaxially oriented polypropylene film), and the like; a polyvinylidene chloride film; a polyvinyl alcohol film; an ethylene-vinyl alcohol copolymer film; and the like. These films may be stretched. A stretching method generally includes simultaneous biaxial stretching or sequential biaxial stretching after a sheet is formed by melt-extruding a resin using an extrusion film forming method or the like. These films may be used alone or as a laminated film of a plurality of films. These films may be subjected to printing, coating, or vapor deposition for imparting a design and functionality to the laminate.

The adhesive used in the present invention may be either a known common adhesive or the oxygen or water-vapor barrier adhesive.

The known common adhesive is not particularly limited as long as it has adhesive force sufficient for bonding the base film and the laminate (A1), and a one-component curing type, a two-component curing type, a non-curing type, or the like can be used as a curing type. Also, a solvent type, a non-solvent type, a water-soluble type, a water dispersion type, or the like can be used as a property. Examples of a resin type which can be used include a polyester resin, a polyether resin, a polyurethane resin, an epoxy resin, an acrylic resin, and the like, and these may be used alone or in combination. Examples of a curing method include isocyanate curing, epoxy curing, energy ray curing, oxidation curing, and the like.

An adhesive for a film laminate is described below as an example of application.

The adhesive of the present invention can be used as an adhesive for a film laminate. A laminated film has the excellent oxygen or water-vapor barrier properties and thus can be used as an oxygen or water-vapor barrier laminated film.

The adhesive of the present invention can be preferably used as an adhesive for a laminated film formed by bonding a plurality of films of the same type or different types. A resin film may be properly selected according to purpose, but, for example, in the case of use as a packaging material, examples of the oxygen or water-vapor barrier film which can be preferably used as a food packaging material include a two-layer composite film using a thermoplastic resin film selected from PET, OPP, and polyamide as an outermost layer and a thermoplastic resin film selected from a cast polypropylene film (abbreviated as "CPP" hereinafter) and a low-density polyethylene film (abbreviated as "LDPE" hereinafter) as an innermost layer; a three-layer composite film including a thermoplastic resin film which forms an outermost layer and is selected from PET, polyamide, and OPP, a thermoplastic resin film which forms an intermediate layer and is selected from OPP, PET, and polyamide, and a thermoplastic resin film which forms an innermost layer and is selected from CPP and LDPE; and a four-layer composite film including a thermoplastic resin film which forms an outermost layer and is selected from OPP, PET, and polyamide, a thermoplastic film which forms a first intermediate layer and is selected from PET and nylon, a thermoplastic film which forms a second intermediate layer and is selected from PET and polyamide, and a thermoplastic resin film which forms an innermost layer and is selected from LDPE and CPP.

The oxygen or water-vapor barrier laminated film of the present invention can be produced by applying the adhesive of the present invention to one of the thermoplastic resin films and then overlaying the other thermoplastic resin film by lamination. The lamination method can use known lamination such as dry lamination, a non-solvent lamination, extrusion lamination, or the like.

Specifically, a dry lamination method includes applying the adhesive of the present invention to one base film by a gravure roll method and then overlaying another base film by dry lamination (dry lamination method). The temperature of a lamination roll is preferably room temperature to about 60°C.

Also, a laminate film can be produced by non-solvent lamination in which the adhesive of the present invention which has been previously heated to room temperature to about 120°C is applied to a base film by a roll such as a roll coater heated to room temperature to about 120°C, and then immediately a new film material is bonded to the surface

of the base film. The lamination pressure is preferably about 10 to 300 kg/$cm^2$.

In an extrusion lamination method, a laminate film can be produced by applying an organic solvent solution of the adhesive of the present invention used as an adhesive adjuvant (anchor coat agent) by using a roll such as a gravure roll or the like, drying the solvent at room temperature to 140°C, performing curing reaction, and then laminating a molten polymer material by an extruder. The polymer material to be molten is preferably a polyolefin resin such as a low-density polyethylene resin, a linear low-density polyethylene resin, an ethylene-vinyl acetate copolymer resin, or the like.

Also, the oxygen or water-vapor barrier laminated film of the present invention is preferably aged after being formed. When polyisocyanate is used as the curing agent, the aging conditions include room temperature to 80°C and a time of 12 to 240 hours, for which adhesive strength is produced.

The adhesive of the present invention is characterized by having the oxygen or water-vapor barrier properties, and thus the laminate film produced by using the adhesive exhibits a very high level of oxygen or water-vapor barrier properties without using an oxygen or water-vapor barrier material which is generally used, such as a PVDC coat layer, a polyvinyl alcohol (PVA) coat layer, an ethylene-vinyl alcohol copolymer (EVOH) film layer, a meta-xylylene adjuvant film layer, or the like.

In the present invention, if required, a film laminated with a vapor deposition layer of a metal such as aluminum or the like or a metal oxide such as silica, alumina, or the like, or a barrier film containing a gas-barrier layer of polyvinyl alcohol, an ethylene-vinyl alcohol copolymer, vinylidene chloride, or the like may be combined for imparting a higher barrier function.

## EXAMPLES

Next, the present invention is more specifically described by examples and comparative examples. In the examples, "parts" and "%" are on a mass basis unless otherwise specified.

(PRODUCTIIOIN EXAMPLE 1) Production example of resin (b1): THEI (OPAEG) 3

In a polyester reactor provided with a stirrer, a nitrogen gas inlet tube, a rectification tube, a water separator, etc., 1136.5 parts of phthalic anhydride, 495.3 parts of ethylene glycol, 668.1 parts of tris(2-hydroxyethyl) isocyanurate, and titanium tetraisopropoxide in an amount corresponding to 100 ppm relative to a total amount of polyvalent carboxylic acid and polyhydric alcohol were charged and gradually heated so that the temperature of an upper portion of the rectification tube did not exceed 100°C, and the internal temperature was kept at 220°C. When the acid value was 1 mgKOH/g or less, esterification reaction was terminated to produce a polyester polyol having a number-average molecular weight of 860, a hydroxyl value of 195.4 mgKOH/g, and an acid value of 0.9 mgKOH/g. The numbers of functional groups such as hydroxyl groups and carboxyl groups in design per molecule of resin (A) were 3 and 0, respectively, and the solubility of the resin (A) was determined as "good".

(PRODUCTIIOIN EXAMPLE 2) Production example of resin (b1): GLY (OPAEG) + MA

In a polyester reactor provided with a stirrer, a nitrogen gas inlet tube, a rectification tube, a water separator, etc., 1316.8 parts of phthalic anhydride, 573.9 parts of ethylene glycol, 409.3 parts of glycerin, and titanium tetraisopropoxide in an amount corresponding to 100 ppm relative to a total amount of polyvalent carboxylic acid and polyhydric alcohol were charged and gradually heated so that the temperature of an upper portion of the rectification tube did not exceed 100°C, and the internal temperature was kept at 220°C. When the acid value was 1 mgKOH/g or less, esterification reaction was terminated to produce a polyester polyol having a hydroxyl value of 339.9 mgKOH/g. Next, the temperature was decreased to 120°C, and 421.8 parts of maleic anhydride was charged and then maintained at 120°C. When, the acid value was about a half of an acid value calculated from the amount of maleic anhydride charged, esterification reaction was terminated to produce a polyester polyol having a number-average molecular weight of about 520, a hydroxyl value of 216.6 mgKOH/g, and an acid value of 96.2 mgKOH/g. The numbers of functional groups such as hydroxyl groups and carboxyl groups in design per molecule of resin (A) were 2 and 1, respectively, and the solubility of the resin (A) was determined as "good".

(PRODUCTIIOIN EXAMPLE 3) Method for producing resin (b1): EGOPA(0.9K)

In a polyester reactor provided with a stirrer, a nitrogen gas inlet tube, a rectification tube, a water separator, etc., 148.1 parts of phthalic anhydride, 84.2 parts of ethylene glycol, and 0.03 parts of titanium tetraisopropoxide were charged and gradually heated so that the temperature of an upper portion of the rectification tube did not exceed 100°C, and the internal temperature was kept at 205°C. When the acid value was 1 mgKOH/g or less, esterification reaction was terminated to produce a polyester polyol having a number-average molecular weight of 900, a hydroxyl value of

126.2 mgKOH/g, and an acid value of 0.36 mgKOH/g. The numbers of functional groups such as hydroxyl groups and carboxyl groups in design per molecule of resin (A) were 2 and 0, respectively, and the solubility of the resin (A) was determined as "good".

(Preparation of adhesive A)

The resin, inorganic compound, and solvent described in the column of "Main agent" in Table 1 were mixed, and the resultant mixture and zirconia beads with the same weight were placed in a vessel and dispersed for 1 hour by using a paint conditioner to produce a main agent in which the inorganic compound was dispersed. Further, the main agent, a curing agent, and a dilution solvent were mixed at a ratio described in Table 1 to prepare an adhesive A.

Further, similarly to the above, the resin, plate-like inorganic compound, and solvent described in Table 1 were used for forming a main agent, and further, the main agent, a curing agent, and a dilution solvent were mixed at a ratio described in Table 1 to prepare each of adhesives B, C, X, and Y. However, the adhesive Y was a non-solvent type adhesive and was thus prepared without using the solvent and the dilution solvent.

[Table 1]

| | | | Adhesive A | Adhesive B | Adhesive C | Adhesive X | Adhesive Y |
|---|---|---|---|---|---|---|---|
| Main agent | Plate-like inorganic compound (C) | BARRISURF HX | 10.0 | 10.0 | - | - | |
| | | HM6025 | - | - | 32.5 | | |
| | Resin | THEI(OPAEG)3 | 40.0 | - | - | - | |
| | | GLY(OPAEG)+MA | - | 40.0 | - | - | |
| | | EGOPA(0.9K) | - | - | 31.4 | - | |
| | | LX703VL | - | - | - | 80.0 | |
| | | HA-380B | | | | | 10.0 |
| | Solvent | Ethyl acetate | 50.0 | 50.0 | 35.5 | - | |
| Curing agent | Isocyanate compound | Takenate 500 | 10.4 | 11.6 | 5.1 | | |
| | | Takenate D110N | 30.4 | 33.9 | 29.6 | 10.0 | |
| | | 2K-SF-380A | | | | | 30.0 |
| Dilution solvent | | Methyl ethyl ketone | 7.4 | 8.3 | | | |
| | | Ethyl acetate | | | 30.0 | 100.0 | |
| Total | | | 148.2 | 153.8 | 134.0 | 90.0 | 40.0 |

·BARRISURF HX (plate-like inorganic compound (C))
Manufactured by IMERYS Corporation, kaoline ($Al_2Si_2O_5(OH)_4$)/non-swelling and interlayer nonionic, plate-like shape, average particle diameter of 1.5 $\mu$m, aspect ratio of about 100)
·HM6025 (plate-like inorganic compound (C))
Manufactured by HENGHAO Corporation, mica ($KAL_2(ALSi_3O_{10}(OH)_2)$/non-swelling, plate-like shape, average particle diameter of 10 $\mu$m, aspect ratio of 100 or more)
·LX703VL: DIC Dry LX-703VL
Manufactured by DIC Graphics Co., Ltd., polyester polyol, nonvolatile content of about 62%, main agent of solvent type adhesive for laminate without having the oxygen or water-vapor barrier properties
·HA-380B
Manufactured by DIC Graphics Co., Ltd., polyether polyol, nonvolatile content of about 100%, polyol component of non-solvent type adhesive for laminate without having the oxygen or water-vapor barrier properties
·2K-SF-380A: DIC Dry 2K-SF-380A
Manufactured by DIC Graphics Co., Ltd., polyisocyanate, nonvolatile content of about 100%, aromatic polyisocyanate component of non-solvent type adhesive for laminate without having the oxygen or water-vapor barrier properties

·Takenate 500 (isocyanate compound (b2))
Manufactured by Mitsui Chemicals Inc., meta-xylylene diisocyanate, nonvolatile content of 100%,
·Takenate D110N (isocyanate compound (b2))
Manufactured by Mitsui Chemicals Inc., XDI-based polyisocyanate, nonvolatile content of 75%

(Coating method and aging method)

Each of the various solvent-type adhesives described above was used for coating and lamination by a dry laminator (manufactured by Musashino Kikai Co., Ltd., 400 m/m dry lamination test coater). A test was performed by a gravure plate printing method under the conditions including a line speed of 60 m/min, a coating width of 30 cm, and a drying furnace temperature of 60°C. The non-solvent adhesive was used for coating and lamination by a non-sol laminator (Hoei Device Co., Ltd.). A test was performed under the conditions including a line speed of 30 m/min, a coating width of 30 cm, and a roll temperature of 70°C. With respect to coating amounts in examples and comparative examples, the coating amount of the oxygen or water-vapor barrier adhesive (B) was about 5.0 g/$m^2$ (solid content), the coating amount of the adhesive X was 3.0 g/$m^2$ (solid content), and the coating amount of the adhesive Y was 2.0 g/$m^2$ (solid content). The laminate A2 was formed by first forming the laminate A1 and then laminating the laminate A1 and a base film. Also, when the lamination side of the laminate A1 was a CPP film or PE film, the lamination side of the laminate A1 was subjected to corona discharge treatment before lamination with the base film. Next, the adhesive of the composite film was cured by aging at 40°C for 3 days to produce a laminated film of each of the examples and the comparative examples.

(Evaluation method)

(1) Laminate strength

After the finish of aging, the laminated film was cut into a width of 15 mm vertically to the coating direction, and adhesive strength between the films was measured as tensile strength by a 180° peeling method and T-type peeing method using universal testing machine Tensilon manufactured by Orientic Co., Ltd. set to an atmospheric temperature of 25°C and a peeling speed of 300 mm/min. The unit of the measured strength was N/15 mm.

(2) Heat seal strength

After the finish of aging, the laminated films were superposed so that the sealant films were on the inside and then heat-sealed by using a heat sealer (manufactured by Tester Sangyo Co., Ltd., TP-201-B) using a seal bar with a width of 10 mm at 0.1 MPa for 1 second at 200°C for CPP as a sealant and 180°C for PE as a sealant. The resultant heat-sealed product was cut into a width of 15 mm, and heat seal strength was measured as peeling tensile strength of a heat-sealed portion by using the same testing machine under the same conditions as in the adhesive strength measurement of (1). The unit of the measured strength was N/15 mm.

(3) Oxygen permeability

After the finish of aging, the laminated film was measured by using oxygen permeability measuring device OX-TRAN 1/50 manufactured by MOCON, Inc. in an atmosphere of 23°C and 90% RH according to JIS-K7126 (equal-pressure method). In addition, RH represents relative humidity.

(4) Water vapor permeability

After the finish of aging, the laminated film was measured by using water-vapor permeability measuring device PARMATRAN-W3/33MG manufactured by MOCON, Inc. in an atmosphere of 40°C and 90% RH according to JIS-K7129 (infrared method). In addition, RH represents relative humidity.

The evaluation results of each of the examples and the comparative examples are shown in Tables 2 to 4.

[Table 2]

| | Example 1 | Example 2 | Example 3 | Example 4 |
|---|---|---|---|---|
| Adhesive between base film and [laminate A1] | Adhesive X | Adhesive X | Adhesive X | Adhesive Y |
| Adhesive of [laminate A1] | Adhesive A | Adhesive B | Adhesive C | Adhesive C |

(continued)

| | | Example 1 | Example 2 | Example 3 | Example 4 |
|---|---|---|---|---|---|
| Configuration of laminate A2 base film/[laminate A1] | | Ny#15/[CPP#30/ CPP#30] | Ny#15/[PE#30/ PE#30] | Ny#15/[PE#30/ PE#30] | Ny#15/[Ny(BC) #15/PE#40] |
| OTR 23°C/90% | | 15.0 | 16.5 | 9.1 | 8.0 |
| MVTR 40°C/90% | | 4.1 | 4.5 | 3.8 | 4.3 |
| Laminate strength /: showing measurement part | Measurement part | Ny/[CPP-CPP] | Ny/[PE-PE] | Ny/[PE-PE] | Ny/[Ny-PE] |
| | 180° | 7.0 | 7.1 | 10.1 | 4.0 |
| | T-peel | 6.5 | 6.9 | 5.3 | 3.5 |
| | Measurement part | Ny-[CPP/CPP] | Ny-[PE/PE] | Ny-[PE/PE] | Ny-[Ny/PE] |
| | 180° | 9.6 | 7.5 | 8.6 | 10.1 |
| | T-peel | 9.2 | 7.2 | 9.2 | 10.4 |
| Heat seal strength | | 45.7 | 49.0 | 51.0 | 60.5 |

[Table 3]

| | | Comparative Example 1 | Comparative Example 2 |
|---|---|---|---|
| Adhesive between base film and sealant | | Adhesive X | Adhesive X |
| Configuration of laminate | | Ny#15/CPP#60 | Ny#15/PE#60 |
| OTR 23°C/90% | | 46.8 | 51.1 |
| MVTR 40°C/90% | | 5.4 | 5.5 |
| Laminate strength /: showing measurement part | Measurement part | Ny/CPP | Ny/PE |
| | 180° | 6.6 | 9.7 |
| | T-peel | 6.8 | 5.8 |
| Heat seal strength | | 48.6 | 55.6 |

[Table 4]

| | Example 5 | Comparative Example 3 |
|---|---|---|
| Adhesive between base film and [laminate A1] | Adhesive X | |
| Adhesive between base film and intermediate film | | Adhesive X |
| Adhesive of [laminate A1] | Adhesive C | |
| Adhesive between intermediate film and sealant | | Adhesive X |
| Configuration of laminate A2 base film/[laminate A1] | PET#12/[CPP#30/VM CPP#25] | |
| Configuration of laminate | | PET#12/VMPET#12/ CPP#30 |
| OTR 23°C/90% | 0.2 | 0.5 |
| MVTR 40°C/90% | 0.5 | 1.0 |

(continued)

| | | Example 5 | Comparative Example 3 |
|---|---|---|---|
| Laminate strength /: showing measurement part | Measurement part | PET/[CPP-VMCPP] | PET/VMPET-CPP |
| | 180° | 4.5 | 3.5 |
| | T-peel | PET breaking | 2.0 |
| | Measurement part | PET-[CPP/VMCPP] | PET-VMPET/CPP |
| | 180° | 5.8 | 8.0 |
| | T-peel | 2.5 | 4.3 |
| Heat seal strength | | 35.0 | 40.2 |

Ny#15: polyamide film manufactured by Unitika Limited, Emblem ON, 15 μm, one-side corona treated
Ny(BC)#15: polyamide film manufactured by Unitika Limited, Emblem ON-BC, 15 μm, both-side corona treated
PET#12: biaxially oriented polyester film manufactured by Toyobo Co., Ltd., Toyobo ester film, E5102, 12 μm
VMPET#12: aluminum vapor-deposited biaxially oriented polyester film manufactured by Toray Advanced Film Co., Ltd., 1310, 12 μm
CPP#30: CPP film manufactured by Toray Advanced Film Co., Ltd., Torefan NO3951, 30 μm
CPP#60: CPP film manufactured by Toray Advanced Film Co., Ltd., Torefan NOZK93KM, 60 μm
PE#30: L-LDPE film manufactured by Mitsui Chemicals Tohcello Inc., TUX-HC, 30 μm
PE#40: L-LDPE film manufactured by Mitsui Chemicals Tohcello Inc., TUX-HC, 40 μm
PE#60: L-LDPE film manufactured by Mitsui Chemicals Tohcello Inc., TUX-HC, 60 μm
VMCPP#25: aluminum vapor-deposited CPP film manufactured by Toray Advanced Film Co., Ltd., 2203, 25 μm

Industrial Applicability

A laminate of the present invention has the excellent oxygen or water-vapor barrier properties and effectively prevents mixing of a component from a layer with contents, and thus can be used as various packaging materials for food and packaging materials for industrial materials which require the oxygen or water-vapor barrier properties.

## Claims

**1.** A laminate (A2) comprising a laminate (A1) used as a sealant film and having a layer configuration of base film/adhesive/laminate (A1),
wherein the laminate (A1) has a layer configuration of film/oxygen or water-vapor barrier adhesive (B)/sealant film.

**2.** The laminate (A2) according to Claim 1, wherein the oxygen or water-vapor barrier adhesive (B) includes a resin containing a resin (b1) having two or more hydroxyl groups as functional groups in one molecule and an isocyanate compound (b2) having two or more isocyanate groups as functional groups in one molecule.

**3.** The laminate (A2) according to Claim 1 or 2, wherein the main skeleton of the resin (b1) has a polyester polyol, polyester polyurethane polyol, polyether polyol, or polyether polyurethane polyol structure.

**4.** The laminate (A2) according to Claim 3, wherein the main skeleton of the resin (b1) has a polyester polyol or polyester polyurethane polyol structure, and a ratio of use of an ortho-oriented aromatic dicarboxylic acid or anhydride thereof is 70% to 100% by mass relative to all polyvalent carboxylic acid components of a polyester-constituting monomer component.

**5.** The laminate (A2) according to Claim 4, wherein the ortho-oriented aromatic dicarboxylic acid or anhydride thereof is at least one selected from the group consisting of orthophthalic acid or anhydride thereof, naphthalene-2,3-dicarboxylic acid or anhydride thereof, naphthalene-1,2-dicarboxylic acid or anhydride thereof, anthraquinone-2,3-dicarboxylic acid or anhydride thereof, and 2,3-anthracenedicarboxylic acid or anhydride thereof.

**6.** The laminate (A2) according to any one of Claims 1 to 5, wherein the oxygen or water-vapor barrier adhesive layer further contains an interlayer nonionic or water-non-swelling plate-like inorganic compound (C).

**7.** The laminate (A2) according to any one of Claims 1 to 6, wherein the laminate (A2) is used as an oxygen or water-vapor barrier film.

**INTERNATIONAL SEARCH REPORT**

International application No.
PCT/JP2014/074384

A. CLASSIFICATION OF SUBJECT MATTER
*B32B27/00*(2006.01)i, *B32B27/40*(2006.01)i

According to International Patent Classification (IPC) or to both national classification and IPC

B. FIELDS SEARCHED

Minimum documentation searched (classification system followed by classification symbols)
B32B1/00-B32B43/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2013-237154 A (DIC Corp.), 28 November 2013 (28.11.2013), claims; paragraphs [0019], [0022], [0054], [0065], [0116], [0134], [0144], [0145]; examples (Family: none) | 1-7 |
| X | JP 2013-129152 A (DIC Corp.), 04 July 2013 (04.07.2013), claims; paragraphs [0016], [0020], [0055], [0066], [0105], [0118], [0140], [0141]; examples (Family: none) | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 December, 2014 (03.12.14) | 16 December, 2014 (16.12.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2014/074384

C (Continuation). DOCUMENTS CONSIDERED TO BE RELEVANT

| Category* | Citation of document, with indication, where appropriate, of the relevant passages | Relevant to claim No. |
|---|---|---|
| A | WO 2013/005767 A1 (DIC Corp.), 10 January 2013 (10.01.2013), claims; paragraphs [0029], [0047], [0070], [0084], [0102], [0103], [0111], [0116], [0117]; examples & JP 2013-14722 A & JP 2013-18904 A & JP 2013-18905 A | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 61162539 A
- JP 61284439 A
- JP 2005081658 A
- JP 10095083 A
- JP 2013129152 A